(19)

Europäisches
Patentamt
European
Patent Office
Office européen
des brevets

(11) **EP 3 319 070 A1**

(12) **EUROPEAN PATENT APPLICATION**

(43) Date of publication:
**09.05.2018  Bulletin 2018/19**

(51) Int Cl.:
**G09C 5/00** (2006.01)     **G06F 21/36** (2013.01)
**H04L 9/32** (2006.01)

(21) Application number: **17195479.5**

(22) Date of filing: **09.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.11.2016  EP 16196947
02.11.2016  EP 16196945
02.11.2016  EP 16196950
02.11.2016  EP 16196957**

(71) Applicant: **Skeyecode
75008 Paris (FR)**

(72) Inventors:
• **PITEL, Guillaume
94240 L'Hay les Roses (FR)**
• **LELEU, Jean-Luc
75005 Paris (FR)**

(74) Representative: **de Roquemaurel, Bruno et al
Omnipat
24 place des Martyrs de la Résistance
13100 Aix en Provence (FR)**

(54) **METHOD FOR AUTHENTICATING A USER BY MEANS OF A NON-SECURE TERMINAL**

(57)    The invention relates to a method for authenticating a user, the method comprising: receiving from a secure processor (ASRV, SE), a software component (GC) configured to generate an image frame comprising random pixels (PXi) having a probability lower than 100% to be visible in the image frame; executing the software component a plurality of times to generate a plurality of image frames; displaying the plurality of image frames at a frame display rate, the image frames including information (ND) which is machine unintelligible as being formed of the random pixels, the frame display rate being such that the information becomes intelligible to the user, the information specifying a biometric challenge to enter by the user; acquiring biometric data (BIOD) from the user; and transmitting the biometric data to the secure processor.

Fig. 4

EP 3 319 070 A1

**Description**

TECHNICAL FIELD

The present invention relates to a method and device for securely authenticating a user from a non-secure terminal, and for executing a secure transaction involving such a non-secure terminal and a remote server, based on such a user authentication.

BACKGROUND

It would be desirable to execute transactions, for instance e-commerce transactions or fund transfer, initiated from mobile terminals such as smartphones, personal computers, digital tablets, or the like, or any other connected device including devices belonging to the Internet of Things (IoT). However, this raises security problems, notably because "malicious software" or "malware" may be executed by a processor (CPU) of the terminal. The malware may be able to access to all or a part of the memories accessible by the processor, and thus may be maliciously configured to spy on any transactions executed by the terminal and to recover any secret data manipulated during these transactions for transmission over the network.

To ensure the security of such transactions, it has already been proposed to entrust cryptographic computations to a dedicated secure element, such as the processor of a UICC ("Universal Integrated Circuit Card") card, e.g. a SIM (subscriber identification module) card with which cell phones are generally equipped. In order to be able to execute one or more payment applications, the secure processor must be able to store as many secret cryptographic keys as there are payment applications. However, loading an application into the memory of a secure processor is a complex operation that needs to be highly secure. Specifically, it involves external parties such as Trusted Service Managers. Since SIM cards are issued by cell phone operators, the latter may refuse to have such applications installed in the card. Furthermore, in the event of theft, or during maintenance of the telephone, the processor of the SIM card may be hacked by a hacker seeking to discover the secret keys stored in its memory.

The patent application WO2012/107698 filed by the Applicant discloses a method using a graphic processor of the terminal as a secure element to perform transaction. This method comprises steps of establishing a secure communication link between the graphic processor of the terminal and an authentication server, and displaying a virtual keypad with keys arranged in a random order. The image of the keypad is displayed using visual cryptography, by successively displaying complementary frames in which the labels of the keys are not intelligible, the complementary frames being combined into an intelligible image by the visual system of the user thanks to the retinal remanence thereof. In this way, even if a malicious program running on a processor of the terminal is able to access the positions of the keys touched by the user during input of a secret code, it cannot, by taking a succession of screenshots, determine which labels correspond to the touched keys.

However, this method requires important calculation resources that are not available in all portable devices such as all of the existing smartphones on the market.

To secure transactions performed using a terminal connected to a web site, it has been proposed to use a single-use secret code which is transmitted to the user each time a transaction needs to be validated. According to a first solution the single-use secret code is transmitted to the user via a distinct communication channel, e.g. via a phone link or SMS (Short Message Service), the user being required to input the received secret code on the terminal to validate the transaction. Another known solution provides an additional hardware device to each of the users, this device generating the single-use secret code after an authentication of the user by means of credentials such as a password or biometric data. These solutions are burdensome for the users who do not always have nearby a phone or mobile or wireless network coverage, or this hardware device, when they are required to validate a transaction. The solution requiring an additional hardware device is costly for the banking organizations. In addition, the solution using a secret code transmitted by SMS does not provide sufficient high security level since it has already been subjected to successful attacks.

Therefore, it may be desirable to propose a method for authenticating a user by means of a non-secure user terminal. It may also be desirable to protect secret data input by users and transaction data transiting through such a non-secure terminal. Further, it may be desirable to make the proposed method compatible with all existing terminals, even with terminals of low computation power.

SUMMARY

A method is disclosed for authenticating a user, the method comprising: receiving from a secure processor, a software component configured to generate an image frame comprising random pixels having a probability lower than 100% to be visible in the image frame; executing the software component a plurality of times to generate a plurality of image frames; displaying the plurality of image frames at a frame display rate, the image frames including information which is machine unintelligible as being formed of the random pixels, the frame display rate being such that the information becomes intelligible to the user, the information specifying a biometric challenge to enter by the user; acquiring biometric data from the user; and transmitting the biometric data to the secure processor,

According to an embodiment, the user being authenticated when the biometric data correspond both to the information and to stored biometric data from the user.

According to an embodiment, the software component is configured to generate a plurality of frame image parts each comprising the random pixels, the method further comprising inserting each generated image frame part into an image frame background to generate the plurality of image frames.

According to an embodiment, the software component is configured to generate encrypted frame image parts comprising the random pixels, the method further comprising:

decrypting, by the user terminal, each generated encrypted image frame part, by applying to each pixel of the encrypted image frame part an XOR operation with a corresponding pixel of a decrypting mask, each decrypted image frame part being inserted into an image frame background to generate one of the plurality of image frames, the decrypting mask being configured to produce a message in the displayed image frames.

According to an embodiment, the machine unintelligible information in the displayed image frames comprises segments arranged to form symbols, or numeric or alphanumeric characters, at least a part of the segments being formed with the random pixels.

According to an embodiment, the segments are arranged to form symbols defining the biometric data to be entered by the user for being authenticated, the response from the user depending on the symbols.

According to an embodiment, the information comprises symbols respectively associated with biometric challenges, one of the symbols being duplicated to specify one of the biometric challenges to enter by the user, the biometric challenges requested to the user comprising at least one of the following: parts and/or movements of the face of the user, using a biometric sensor to capture images of the face or eyes of the user, fingerprints of the user hand fingers, using a biometric sensor to capture fingerprints of the user, a sound, a letter or a word to be pronounced by the user, using a biometric sensor to capture voice or images of lip movements of the user, eyes and/or eyes closure movements, using a biometric sensor to capture images of eyes or iris of the user.

According to an embodiment, the software component is configured to set a probability of the random pixels to be visible in the displayed image frames, the probability being selected in a set of visible probability values.

According to an embodiment, the software component is configured to provide the random pixels with a probability set to a value equal to 50% or comprised between 12.5% and 87.5%, to be visible in the displayed image frames.

According to an embodiment, the software component is encoded as a garbled circuit comprising circuit inputs, circuit outputs, logic gates and wires, each logic gate having two inputs and one output, each wire having a first end connected to one of the circuit inputs or to one of the logic gate outputs and a second end connected to one of the logic gate inputs or to one of the circuit outputs, the garbled circuit being generated by randomly generating a valid data representing each binary state of each of the wires, and by computing for one logic gate of the garbled circuit, truth table values as a function of each valid data of each input of the logic gate, each valid data of the output of the logic gate and a logic operation performed by the logic gate.

According to an embodiment, the software component comprises a pixel set generation circuit for a set of random pixels to generate, each generation circuit comprising a first logic gate and a set of second logic gates, the first logic gate combining a first input data to a randomly selected second input data, and providing an output data to a first input of each of the second logic gates, a second input of each of the second logic gates receiving a third input data, each of the outputs of the second logic gates providing a pixel value of the set of random pixels.

Embodiments, may also relate to a terminal configured to: receive from a secure processor a software component configured to generate an image frame comprising random pixels having a probability lower than 100% to be visible in the image frame; execute the software component a plurality of times to generate a plurality of image frames; display the plurality of image frames at a frame display rate, the image frames including information which is machine unintelligible as being formed of the random pixels, the frame display rate being such that the information becomes intelligible to a user, the information specifying a biometric challenge to enter by the user; acquire a biometric data from a user of the terminal; and transmit the biometric data to the secure processor.

According to an embodiment, the terminal is configured to perform the method as previously defined.

According to an embodiment, the secure processor is a secure element associated with the terminal and connected to a main processor of the terminal, or belongs to a remote server linked to the terminal through a data transmission network.

Embodiments may also relate to a secure element processor configured to execute the operations performed by a secure processor in the method as previously defined, wherein the secure element is connected to a main processor of a terminal.

Embodiments may also relate to a server configured to execute the operations performed by a secure processor in the method as previously defined, wherein the server is linked to the terminal through a data transmission network.

Embodiments may also relate to a computer program product loadable into a computer memory and comprising code portions which, when carried out by a computer, configure the computer to carry out the method as previously defined.

BRIEF DESCRIPTION OF THE DRAWINGS

Examples of the method and/or device may be better understood with reference to the following drawings and description. Non-limiting and non-exhaustive descriptions are described with the following drawings.

Figure 1 is a block diagram of user terminals performing transactions with remote servers;
Figure 2 is a block diagram of a user terminal;
Figure 3 is a sequential diagram of initialization steps performed by a user terminal, an authentication server and an application server, according to an embodiment;
Figure 4 is a sequential diagram showing steps of a user authentication procedure, according to an embodiment;
Figure 5 is a block diagram of a database managed by the authentication server, according to an embodiment;
Figures 6 and 7 are sequential diagrams showing steps of a user authentication procedure, according to other embodiments;
Figures 8A and 8B illustrate respectively an image frame displayed by the user terminal, and a corresponding resultant image which can be observed by a user of the user terminal, according to another embodiment;
Figures 9A and 9B illustrate respectively an image frame displayed by the user terminal, and a corresponding resultant image which can be observed by the user, according to another embodiment;
Figures 10A and 10B illustrate respectively an image frame displayed by the user terminal, and a corresponding resultant image which can be observed by the user, according to another embodiment;
Figure 11 is a block diagram of an application program executed by the user terminal, according to an embodiment;
Figure 12 is a block diagram of a circuit implemented by software in the user terminal, according to an embodiment;
Figure 13 is a block diagram of a database describing the circuit implemented in the user terminal, according to an embodiment;
Figure 14 is a block diagram illustrating a processing performed by the application program for displaying the image frame of Figure 8A, according to an embodiment;
Figure 15 is a block diagram of a part of the circuit of Figure 12, according to another embodiment;
Figure 16 is a sequential diagram showing authentication steps, according to another embodiment.

DETAILED DESCRIPTION

In the figures, like referenced signs may refer to like parts throughout the different figures unless otherwise specified.

In the following, the term "secure" is employed according to its plain meaning to those of ordinary skill in the art and encompasses, in different embodiments, security arising from techniques such as encryption, or other types of software or hardware control used to isolate information from the public or to protect it against unauthorized access or operation. The expressions "secure communication" and "secure communication link" refer to communications that are encrypted using public/private key pairs, or symmetrical key encryption with keys shared between communicating points. "Secured communications" can also involve virtual private networks, and other methods and techniques used to establish authenticated and encrypted communications between the communicating points.

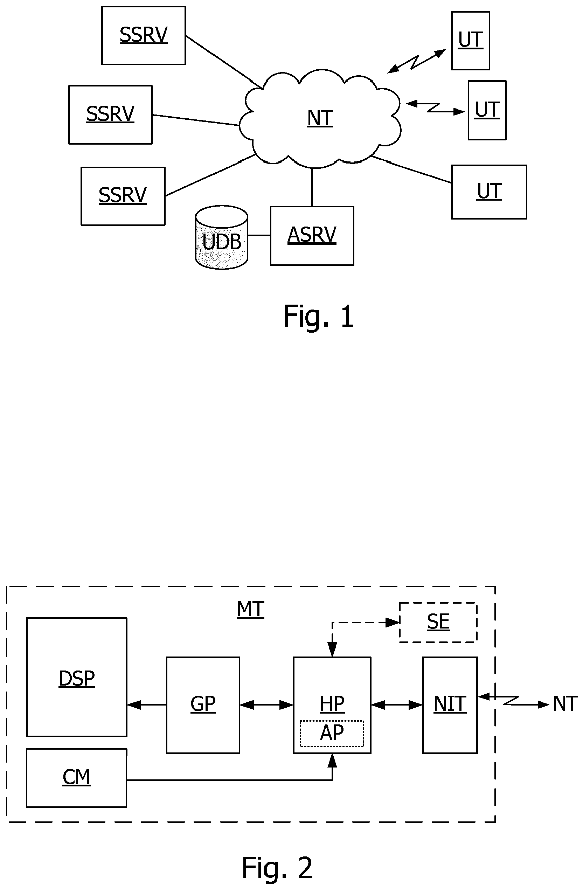

Figure 1 illustrates user terminals UT that can perform transactions with remote service provider servers or application servers SSRV through communication networks NT. In the following, the term "user terminal" shall be synonymous and refer to any device that can communicate with one or more remote servers such as application servers and service provider servers. Thus, a user terminal can be for instance a mobile phone, a smartphone, a smartwatch, a personal computer, a payment terminal and a digital tablet, or any equipment having communication and man-machine interface capabilities. Those two functionalities may be also provided by two or several devices, provided that those devices are securely associated or linked. The communications networks may include IP (Internet Protocol) networks, such as Internet, mobile or cellular networks, wireless networks, and any kind of network that can be used to establish a communication link between a user terminal and a remote server.

According to an embodiment, an authentication server ASRV is configured to implement a method for authenticating a user during transactions involving an application or service provider server SSRV and a user terminal UT, based on a two-factor authentication scheme.

Figure 2 illustrates a conventional terminal UT, comprising communication circuits NIT for communicating with a remote server such as the server ASRV, through a transmission network such as the network NT. The terminal UT can be a cellular phone, a smartphone or a PDA (Personal Digital Assistant) or any other device such as a digital tablet or a personal computer including communication circuits to be connected to a network such as Internet network. The user terminal UT further comprises a main processor HP (also called "Central Processing Unit" - CPU) connected to the communication circuits NIT, a display screen DSP, a graphic processor GP connected to the processor HP and controlling the display screen DSP, and a control device CM connected to the processor HP. The control device can include a keyboard or keypad, or a touch-sensitive surface, e.g. transparent and disposed on the display screen DSP. The control device CM can further include a pointing device such as a mouse, a pencil or a pen.

The terminal UT can further comprise a secure element SE, such as a secure processor that can be standalone or embedded into a smartcard UICC. The secure processor SE can be for example a SIM ("Subscriber Identity Module") card, or a USIM ("Universal Subscriber Identity Module"), providing an access to a cellular network. The secure processor SE can include an NFC ("Near Field Communication") circuit to communicate with a contactless reader. The NFC circuit can be embedded into a SIM card (SIM-NFC) or UICC, or in a SoC ("System on Chip") circuit, or in an external memory card, for example an "SD card". The circuits NIT can include a mobile telecommunication circuit giving access to a mobile cellular network and/or to the Internet network, through the cellular network, and/or a wireless communication circuit (Wi-Fi, Bluetooth™, or any other radio frequency or wireless communication methodology), and/or any other wired or wireless connection circuit that can be linked to a data transmission network such as Internet.

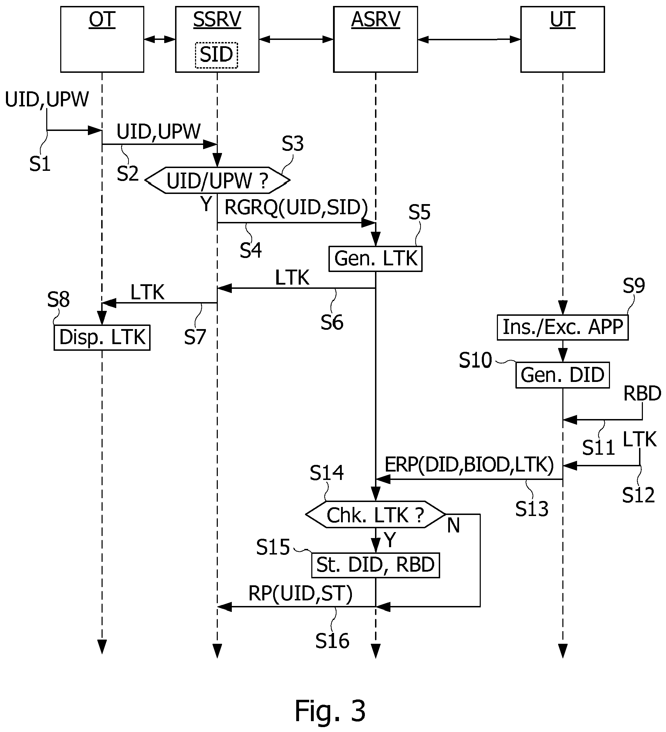

Figure 3 illustrates registration steps S1 to S16 provided for registering a user terminal UT to be used for authenticating a user to validate a transaction or to access a service. Steps S1 to S8 can be executed only once. In step S1, the user connects a user terminal OT to the server SSRV of the service provider, e.g. to a web site of the service provider, and provides credentials such as a user identifier UID and a corresponding password UPW to the server SSRV. In step S2, the user credentials UID, UPW are transmitted by the terminal OT to the server SSRV. In step S3, the server SSRV checks the received credential UID, UPW and if they correspond to a valid registered user, the server SSRV sends to the authentication server ASRV, a registration request RGRQ containing the user identifier UID and a service identifier SID related to the service provider server SSRV (step S4). The communication link between the servers SSRV and ASRV is secured, such that a hacker cannot retrieve the transmitted data. The following steps performed by the server ASRV are executed by a secure processor of the server ASRV or within a secure domain thereof. The links between the terminals OT and the server SSRV and between the terminals UT and the server ASRV are not required to be secure links.

In steps S5 and S6, the authentication server ASRV generates a single-use link token LTK (dedicated to registration of the user identified in step S2) and transmits it to the server SSRV in response to the registration request RGRQ. The link token LTK establishes a link between the received user identifier UID and the service identifier SID. The link token LTK can have a time-limited validity that may be fixed to a value between several minutes and several hours. In step S7, the server SSRV receives the link token LTK and transmits it to the terminal OT. In step S8, the terminal OT displays the link token LTK.

In step S9, the user downloads and/or installs and/or launches execution of an application APP dedicated to or involving user authentication in a user terminal UT to be used for authentication and involving the authentication server ASRV. The terminal UT may be the terminal OT or another terminal (a mobile phone, a smartphone, a smartwatch, a personal computer, a payment terminal and a digital tablet, or any equipment having communication and man-machine interface capabilities). Steps S9 to S16 are performed at a first execution of the application APP by the terminal UT. In step S10, the application APP generates a unique device identifier DID of the terminal UT. Then the user is invited to introduce in the terminal UT requested biometric data RBD using sensors of the terminal UT (or sensors securely associated with the terminal), for example according to displayed instructions. According to examples, the user can be instructed to enter fingerprints of several or all of his fingers using a fingerprint sensor, and/or to pick up pictures of his face (e.g. left, front, right pictures), using a camera (a conventional imaging camera, or any other type of camera such as thermal or infrared camera), and/or voice recordings by saying a list of words, letters, or figures displayed by the terminal UT, using a microphone. The user is further invited to input the link token LTK received and displayed in steps S7, S8. In steps S11 and S12, the user inputs the requested biometric data and the link token LTK. The link token LTK may be displayed in the form of an optical code, such as a QR code, and captured on the display screen of the terminal OT by the application APP using the camera of the terminal UT. In step S13, the application APP transmits a registration message ERP to the authentication server ASRV, this message containing the device identifier DID, the requested biometric data RBD and the link token LTK. In step S14, the server ASRV checks the validity of the received link token LTK. A link token may be considered invalid when its validity period has elapsed, or when it has been already used once or a predefined number of times to identify a device. If the link token is valid, the server ASRV stores the device identifier DID and the entered biometric data RBD as reference biometric data RBD in a user database UDB, in step S15. In step S16, the server ASRV can transmit a message RP in response to the request RGRQ to the service provider server SSRV. The message RP contains the user identifier UID and a status of the registration depending on the validity check of the link token performed in step S14.

If the check performed in step S14 succeeds, the user terminal UT is regularly registered by the server ASRV and thus it can be used as a second authentication factor associated with the user, the authentication of the user by the service provider server SSRV being considered as a first authentication of the user.

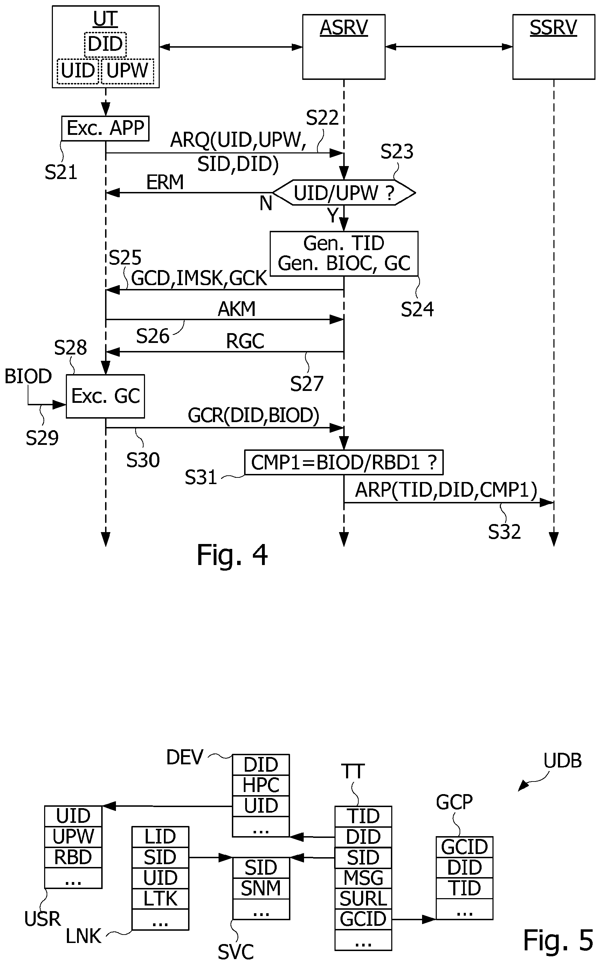

Figure 4 illustrates authentication steps S21 to S32, which are performed to authenticate the user during a transaction conducted by the application APP or for executing an operation of this application, requiring the user to be authenticated. During the authentication process, the user terminal UT has been previously registered by the authentication server ASRV, for example by executing steps S1 to S15 of Figure 3. The user registration can be performed in a separate preliminary process. In step S21, the user terminal UT launches execution of the application APP. In step S22, the application APP needs to authenticate the user and transmits an authentication request ARQ to the authentication server ASRV. The authentication request ARQ contains an identifier SID of the service, the credentials UID, UPW of the user involved in the transaction, the service provider identifier SID for which the authentication should be performed, the device identifier DID of the user terminal UT, and an address SURL of a service provider server where a result of the authentication must be transmitted by the authentication server ASRV. The authentication request ARQ may also optionally contain a message MSG to be displayed to the user and presenting for example information related to the transaction to be validated by the user (e.g. an amount to be paid).

In step S23, the authentication server ASRV receives the request ARQ, and checks consistency of the data transmitted in the authentication request ARQ. To this end, the authentication server ASRV may use the data stored in the database UDB, or send an authentication request message to the server SSRV, containing the user credentials UID, UPW using the address SURL. When the server SSRV receives such an authentication request message, it verifies the consistency of the user credentials and provides a response to the server ASRV containing a result of the verification. If the transmitted data are not consistent, the server ASRV transmits an error message ERM to the user terminal UT and the execution of the application APP ends or the application asks the user for other credentials (this may be done a predefined maximum number of times, for example three trials). If the data in the received request ARQ are consistent, the authentication server ASRV performs step S24 where it generates a biometric challenge BIOC, preferably of single-use, and a distinct dedicated software component GC specific to the user terminal UT corresponding to the device identifier DID and to the biometric challenge. The software component GC is designed to display the biometric challenge BIOC. The authentication server ASRV can also generate a unique transaction identifier TID which is stored in the database UDB. In step S25, the server ASRV sends to the terminal UT structure and content data GCD defining the software component GC and including input data of the software component in an encrypted form, a final mask IMSK to be applied to image frame parts generated by the software component circuit, and a cryptographic data GCK to be used to execute the software component GC.

In step S26, the application APP executed by the terminal UT receives the data GCD, IMSK, GCK related to the software component GC and may transmit an acknowledge message AKM to the server ASRV in response to the data received in step S25. If the application APP is not currently running on the terminal UT, the reception of the data related to the software component may trigger the execution of the application APP. In step S27, the server ASRV may send to the terminal UT a request RGC to execute the software component GC. In step S28, the reception of the request RGC triggers the execution by the application APP of the software component GC which displays image frames showing the message MSG and the biometric challenge BIOC. The application APP executed by the terminal UT may also trigger the execution of the software component GC when it is received in step S25.

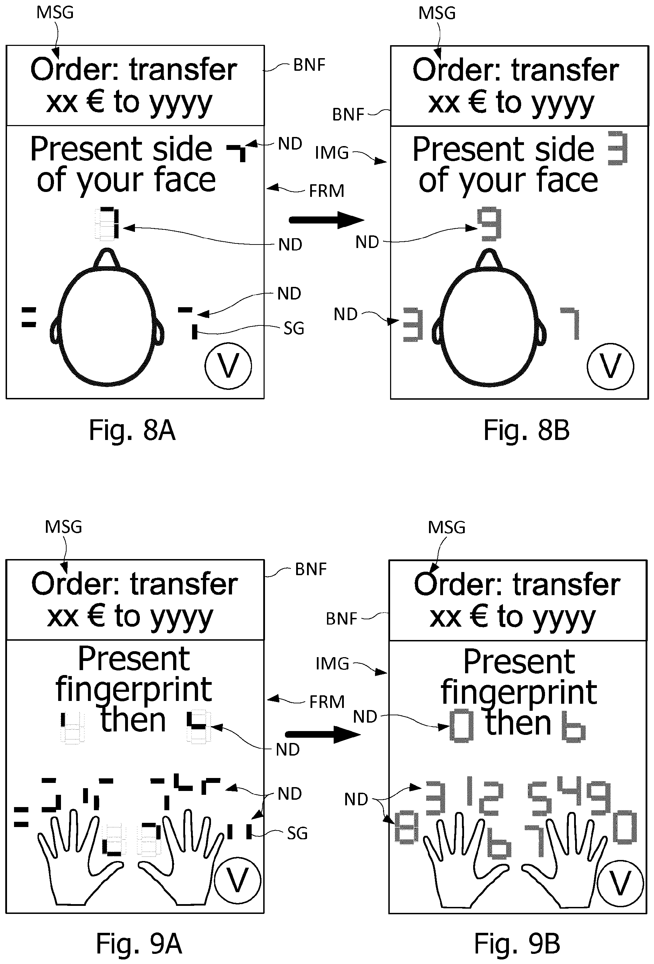

According to an embodiment, the software component GC is configured to generate image frames comprising information formed of randomly visible pixels, such that when the generated image frames are displayed by the user terminal UT, the information becomes intelligible to the human visual system thanks to the persistence of the latter, but not in screenshots of the display screen DSP. According to an embodiment, the software component GC is configured to display a biometric challenge BIOC requesting biometric data as a function of information displayed using blinking pixels, as detailed below using examples of Figures 8-10.

In step S29, the user of the terminal UT inputs the requested biometric data BIOD. In step S30, the application APP transmits the result GCR of the software component execution containing biometric data BIOD entered by the user and the device identifier DID to the server ASRV. In step S31, the server ASRV determines the reference biometric data RBD1 corresponding to the biometric data requested by the software component GC, the software component GC being generated by the server ASRV. The server ASRV checks the compliance of the entered biometric data BIOD with the requested biometric data RBD1 selected in the reference biometric data RDB stored in the database UDB in association with the user identifier UID. In step S32, the server ASRV transmits to the service provider server SSRV using an address SURL of the server SSRV, an authentication response ARP containing the user identifier UID, the result of the verification CMP1 performed in step S31, and possibly, the transaction identifier TID. The authentication response ARP may be also transmitted to the application APP executed by the user terminal UT. In this way, the user corresponding to the identifier UID is authenticated and the transaction TID may be validated only when the entered biometric data BIOD match the requested biometric data RBD1 corresponding to the software component GC sent by the server ASRV to the user terminal UT in step S25.

In this way, a malware installed in the terminal UT or a man-in-the-middle attack between the server ASRV and the user terminal UT cannot discover the requested biometric data without executing the software component GC. If this happens, the hacker performing the attack must also have the biometric data of the user to select in them the requested biometric data, and send an authentication message ARP to the server ASRV (as in step S30). If this happens, the server ASRV may receive two messages ARP for a same transaction TID or from the same user terminal UT, one from the authenticated user and one from the hacker. In this case, the server ASRV can decide to invalidate the transaction or raise a flag or perform any other specific action related to this event.

According to an embodiment, the message GCR is transmitted by the user to the server ASRV (step S30) by another transmission channel.

Figure 5 illustrates different tables USR, DEV, SVC, TT, GCP of the database UDB. The table USR contains one record for each registered user, each record comprising a device identifier UID, the corresponding user password UPW, and reference user biometric data RBD. The table DEV contains one record for each registered user device or terminal UT, each record comprising a device identifier DID, and the corresponding user identifier UID. The table SVC contains one record for each service provider registered with the authentication server ASRV, each record of the table SVC comprising a service identifier SID and a service name SNM. The table TT contains one record for each current transaction, each record comprising a transaction identifier TID, a device identifier DID, a service identifier SID, the message MSG to be displayed by the software component GC triggered by the application APP and executed by the terminal having the identifier DID, the address SURL provided in step S22, and an identifier GCID identifying the software component generated for the transaction TID. The table GCP contains one record for each software component generated by the server ASRV, each record comprising a software component identifier GCID, a device identifier DID of the device UT for which the software component GC was generated in step S24, and the identifier TID of the transaction for which the software component GC was generated. Since each of the software components is dedicated to one transaction and consequently generated and executed for only one user authentication, the records corresponding to an already ended transaction can be deleted from the table GCP, but they may be kept for statistical purposes or to ensure the unicity of each transaction. In other embodiments, each software component can be executed a given number of times or have a validity period of use.

According to an embodiment, the operations performed by the authentication server ASRV (in Figures 3 and 4) can be implemented in the service provider server SSRV. In such a case, the server SSRV does not need to be identified in the steps S22 and S32, nor to be registered in the data base UDB.

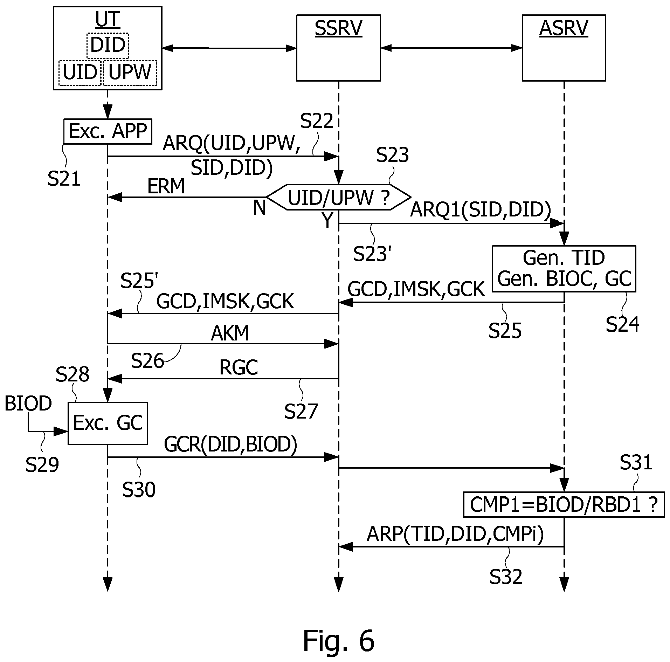

According to another embodiment, the user terminal UT communicates uniquely with the service provider server SSRV. Therefore, the user credential check (step S23) is performed by the service provider server SSRV, and thus the authentication server ASRV does not have to know the user password UPW to be used to access the service provided by the server SSRV. This embodiment is illustrated in Figure 6 which shows the authentication steps S21 to S32, which are successively performed to authenticate the user during a transaction. In step 22, the authentication ARQ request is transmitted from the user terminal UT to the service provider server SSRV. The user authentication step S23 is performed on the basis of the user credentials UID, UPW by the server SSRV. In a step S23' following step S23, the server SSRV transmits an authentication request ARQ1 to the authentication server ASRV. The authentication request ARQ1 comprises the identifier SID of the service provider and the user device identifier DID. After receiving the authentication request ARQ1, the server ASRV executes step S24 as illustrated in the embodiment of Figure 4. In step S25, the server ASRV transmits the structure and content data GCD defining the software component GC and including input data of the software component in an encrypted form, the final mask IMSK to be applied to image frame parts generated by the software component circuit, and the cryptographic data GCK to be used to execute the software component. These data can be transmitted directly to the user terminal UT or by means of the server SSRV which retransmits them to the terminal UT in step S25'. Then the steps S26 and S27 can be performed between the user terminal UT and the server ASRV or as shown in Figure 6, between the user terminal UT and the server SSRV.

Then the terminal UT performs the steps S28 to S30. The software component result GCR sent in step S30 by the terminal UT can be transmitted directly to the server ASRV or as illustrated in Figure 6, received first by the server SSRV which retransmits it to the server ASRV. Upon reception of the software component result GCR, the server ASRV performs the steps S31 and S32 as illustrated in Figure 4. An authentication report can be transmitted to the user terminal UT either by the server ASRV or by the server SSRV.

Instead of being performed by the application APP, the steps S22, S26, S28 and S30 may be performed within or by a web browser installed in the terminal UT, the steps S26, S28 and S30 being performed by a script executed by the web browser, such as a script written in "JavaScript", and transmitted for instance in a web page by the server ASRV. In an embodiment, those transmissions may be encrypted, to enhance security level.

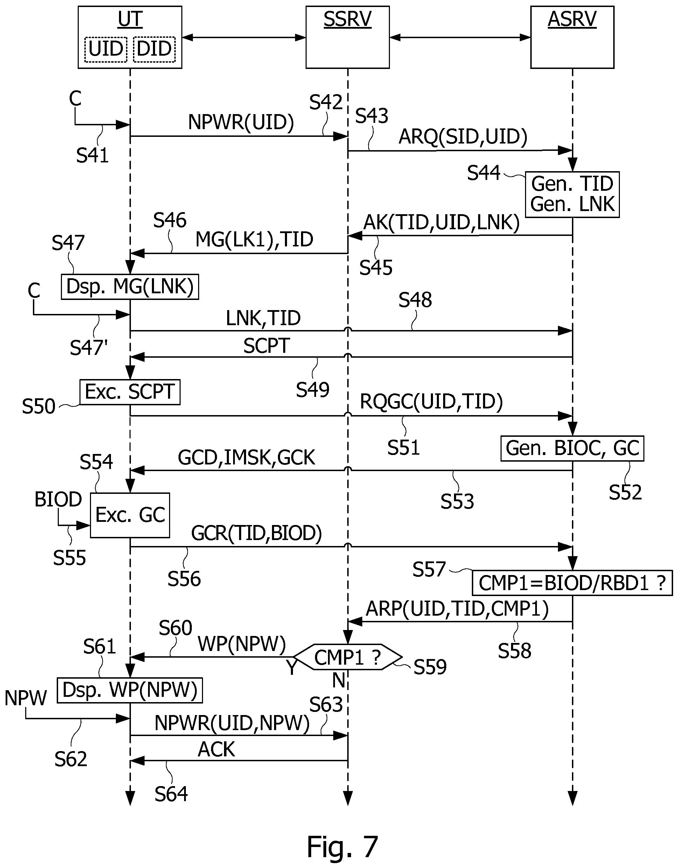

Figure 7 illustrates an embodiment implemented from a web browser executed by the user terminal UT. The embodiment of Figure 7 comprises steps S41 to S64 performed by the user terminal UT, the service provider server SSRV and the authentication server ASRV. In step S41, a web browser installed in the user terminal UT displays a web page from a web site of the service provider. The displayed web page contains for example a link triggering an operation requiring the user to be authenticated. For example, this link triggers an operation generating a new password for accessing a user account with the service provider. When the user activates this link, a message NPWR requesting a new password is transmitted to the server SSRV in step S42. The message NPWR contains a user identifier UID and a device identifier of the terminal UT used by the user in steps S41, S42. When it receives the message NPWR in step S43, the server SSRV transmits an authentication request ARQ to the authentication server ASRV. The request ARQ contains an identifier SID of the service provider, an identifier UID of the user (e.g. an email address of the user). In step S44, the server ARSV receives the request ARQ and generates a transaction identifier TID and a link LNK to request an authentication. The transaction identifier TID identifies the current user authentication transaction. In step S45, an acknowledge message AK containing the transaction identifier TID, the user identifier UID and the link LNK is transmitted by the server ASRV to the server SSRV. In step S46, the server SSRV transmits to the user terminal UT a message MG(LNK) containing the link LNK and the transaction identifier TID, using an email address of the user that can be transmitted by the user terminal UT in step S42.

In step S47, the terminal UT (or optionally an email application or a web browser installed in the terminal) displays the received message MG(LNK). Then the user activates the link LNK in the displayed message in step S47'. In step S48, the activation of the link LNK triggers the transmission by the user terminal to the server ASRV of a message containing the transaction identifier TID. At the reception of such a message in step S49, the server ASRV transmits to the user terminal a script SCPT, for example written in the language "JavaScript", to be executed by a web browser installed in the terminal UT. The steps S50, S51, S54, S56, S61 and S63 are performed within or by a web browser installed in the terminal UT (or respectively by the script SCPT executed in the web browser). In step S50, the web browser of the terminal UT launches execution of the received script SCPT. In step S51, the terminal UT controlled by the script SCPT sends a request RQGC to obtain a dedicated software component GC specific to the user terminal UT. The request RQGC contains the identifiers TID and UID, and optionally some information about the user terminal such as a type (Personal computer / smartphone / digital tablet / ...) of the user terminal UT. In step S52, the authentication server ASRV receives the request RQGC and generates a biometric challenge BIOC, preferably of single-use, and a distinct dedicated software component GC specific to the user terminal UT and the application requesting the software component (dedicated application or web browser), as in previously described step S24. In step S53, the server ASRV sends to the terminal UT structure and content data GCD defining the software component GC and including input data of the software component in an encrypted form, a final mask IMSK to be applied to image frame parts generated by the software component circuit, and a cryptographic data GCK to be used to execute the software component.

In step S54, the script SCPT executed by the web browser in the terminal UT receives the data GCD, IMSK, GCK related to the software component GC and transmitted in step S53. The terminal UT may send an acknowledge message to the server ASRV in response to the data received in step S53. Then the script SCPT executes the software component GC which displays image frames showing a biometric challenge BIOC requesting biometric data as a function of information displayed using randomly visible pixels. In step S55, the user of the terminal UT inputs the requested biometric data BIOD, using the terminal UT or any other terminal. In step S56, the script SCPT executed by the terminal UT transmits the biometric data BIOD entered by the user and the transaction identifier TID to the server ASRV. In step S57, the server ASRV determines the displayed biometric challenge BIOC and the requested biometric data RBD1, as a function of the user identifier UID and the software component GC generated in step S52. Then, the server ASRV compares the entered biometric data BIOD with the requested biometric data RBD1. In step S58, the server ASRV transmits to the service provider server SSRV, an authentication response ARP containing the user and transaction identifiers UID, TID, and the result CMP1 of the comparison performed in step S57. In step S59, if the entered biometric data BIOD matches the requested biometric data RBD1 of the user identified by the user identifier UID, the user is authenticated and the server SSRV performs an operation requested by the user and requiring such an authentication. In the example of an operation of generating a new password, the server SSRV may transmit in step S60, to the user terminal UT a web page WP(NPW) enabling the user to enter a new password for his account dedicated to the service provider. The user terminal to which the web page WP(NPW) is to be transmitted is known by the server SSRV from step S42 at which it receives the new password request. In step S61, the web browser of the user terminal UT displays the received web page WP(NPW). In step S62, the user introduces a new password NPW in the displayed web page WP(NPW). In step S63, the user terminal UT transmits the new password NPW to the server SSRV, together with the user identifier UID, in a password change request NPWR. In step S64, the server ASRV may send an acknowledge message ACK to the terminal UT.

In this way, steps S43 to S60 require the user to read on the user terminal UT which biometric data are requested and to enter these data using sensors of the terminal UT. Therefore, a hacker cannot determine which biometric data are requested, even if he has recordings of these biometric data. In addition, a human action is advantageously required to perform these operations, which prevents automatic attacks directed to a large number of user accounts.

The operations performed by the authentication server ASRV may be implemented in the service provider server SSRV.

The communications between the user terminal UT and the server ASRV may be secured, e.g. using the SSL protocol, at least from step S49 to step S56, thereby preventing a man-in-the-middle attack.

Figure 8A illustrates an example of an image frame FRM displayed by the user terminal UT when it executes the software component GC. The image frame FRM comprises a banner frame BNF displaying the message MSG. In the example of Figure 8A, the message MSG contains information related to a transaction to be validated by the user, for example "Order: transfer xx € to yyyy". The image frame FRM further presents a biometric challenge requesting the user to capture a part of his face using a camera of the terminal UT or connected thereto. To this purpose, the image frame FRM presents a stylized human head, the left, front and right sides of the head being associated with a respective randomly chosen number ND. The image frame FRM further presents a biometric challenge "Present side <number> of your face" and a validation key "V", "<number>" corresponding to one of the displayed numbers ND.

According to an embodiment, to prevent the displayed numbers ND from being acquired using a screenshot function of the terminal UT, the numbers ND are displayed using segments SG, for example seven segments, and only a part of the segments forming each displayed numbers is displayed in each image frame generated by the software component GC. To this purpose, each visible segment SG to be displayed is present in an image frame FRM generated by the software component GC with a probability lower than 100%, for example equal to 50%. Thanks to its persistence property, the human visual system combines the image frames successively displayed by the terminal UT. Thus the displayed numbers ND become intelligible to the user, but cannot be captured using a screenshot function.

Segments SG or pixels are invisible or visible in one of the generated image frames FRM when they are displayed respectively with a background color of the image frame, or with a color different from the background color. The background color is defined by the color of the pixels around the considered segment SG, and may vary as a function of the position of the segment within the image frame FRM. In another embodiment, the segments are displayed on a background image. Each pixel of an invisible segment is displayed with the color the pixel of the background image which is located below the segment pixel.

Figure 8B shows the displayed image IMG as it is perceptible by the human visual system when the image frames FRM generated by the software component GC are displayed at a sufficiently high frequency (greater than 30 Hz) for example at 60 Hz, such that a new frame generated by the software component is displayed every 16.6 ms. As shown in the example of Figure 8B, the displayed numbers ND appear in grey to a user when visible segments to be displayed are inserted in the frames FRM with a probability lower than 100%. In the example of Figure 8B, the left, front and right sides of the face are numbered 3, 9 and 7, and the requested face side to capture is side 3, i.e. the left side of the face.

The numbers "xx" and letters "yyyy" in the message MSG can be also displayed using segments, each visible segment appearing in each generated image frame FRM with a probability lower than 100%, for example 50%.

Figure 9A illustrates another example of an image frame FRM displayed by the user terminal UT when it executes the software component GC. The image frame FRM comprises the banner frame BNF displaying the message MSG. The image frame FRM further presents another biometric challenge requesting the user to enter fingerprints of designated fingers using for instance a fingerprint sensor of the terminal UT or connected thereto. To this purpose, the image frame FRM presents stylized left and right human hands, each finger being associated with a randomly chosen number ND. The image frame FRM further presents a biometric challenge "Present fingers <number> then <number>" and a validation key "V". The numbers ND are displayed using segments SG, for example seven segments, and only a part of the segments forming each displayed numbers is displayed in each displayed image frame generated by the software component GC. To this purpose, each visible segment SG to be displayed is present in an image frame FRM generated by the software component GC with a probability lower than 100%, for example equal to 50%.

Figure 9B illustrates the displayed image IMG as it is perceptible by the human visual system when the image frames FRM generated by the software component GC are displayed at a sufficiently high frequency. In the example of Figure 9B, the displayed numbers ND appear in grey to a user when visible segments to be displayed are inserted in the frames FRM with a probability lower than 100%. In this example , the back face of the hands are shown, the left hand being placed to the left of the right hand, and the ten fingers are associated respectively with the randomly chosen numbers (from left to right) 8, 3, 1, 2, 6, 7, 5, 4, 9 and 0. The requested fingerprints are numbered 0 then 6, which correspond to the fingerprints of the little finger of the right hand, and the thumb of the left hand.

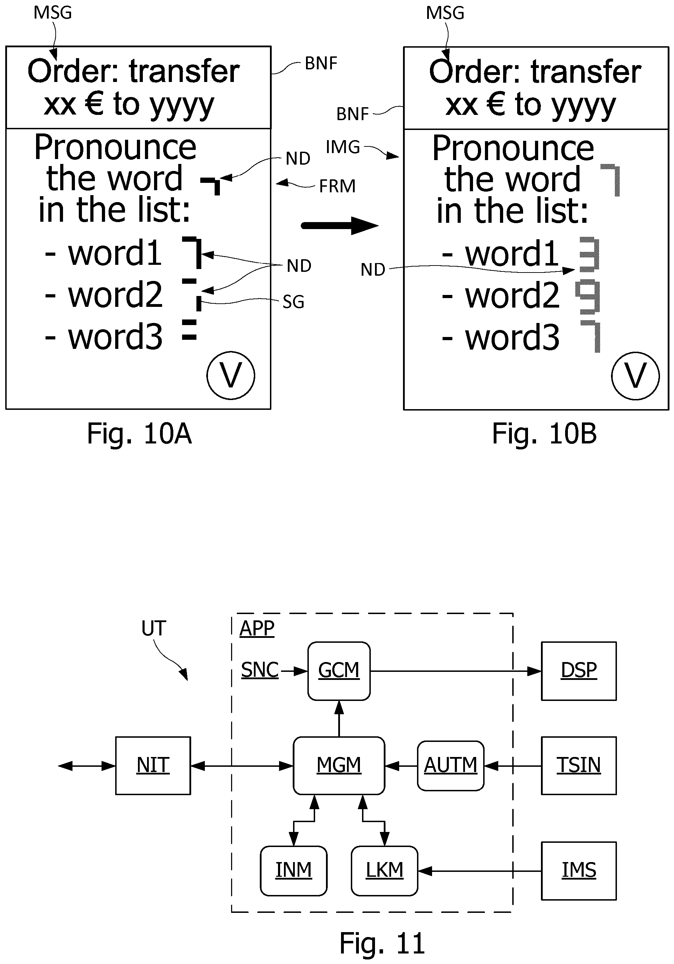

Figure 10A illustrates another example of an image frame FRM displayed by the user terminal UT when it executes the software component GC. The image frame FRM comprises the banner frame BNF displaying the message MSG. The image frame FRM further presents another biometric challenge requesting the user to pronounce one or more words, using a microphone of the terminal UT or connected thereto. To this purpose, the image frame FRM presents a list of words which can be selected in a dictionary, each word being associated with a randomly chosen number ND. The image frame FRM further presents a biometric challenge "Say the word <number>" and a validation key "V".

The numbers ND are displayed using segments SG, for example seven segments, and only a part of the segments forming each displayed numbers ND is displayed in each image frame generated by the software component GC. To this purpose, each visible segment SG to be displayed is present in an image frame FRM generated by the software component GC with a probability lower than 100%, for example equal to 50%.

Figure 10B illustrates the displayed image IMG as it is perceptible by the human visual system when the image frames FRM generated by the software component GC are displayed at a sufficiently high frequency. In the example of Figure .10B, the displayed numbers ND appear in grey to a user when visible segments SG to be displayed are inserted in the frames FRM with a probability lower than 100%. In this example, the selected displayed words are "word1", "word2" and "word3", and are associated respectively with the numbers 3, 9 and 7, and the requested word to say is numbered 7, i.e. the word "word3". Instead of words, the user can be requested to say letters or numbers which can be displayed using segments SG, only a part of the segments forming each displayed letters or numbers being displayed in each image frame generated by the software component GC.

In another embodiments, the biometric challenge can be for instance "Say the words <number1>, <number2> and <number3>" or "Pronounce the letters <number1> and <number2> of the <number3> word".

Obviously, the present disclosure is not limited to the examples of Figures 8A, 9A and 10A. Other biometric challenges using symbols (alphanumeric or not) displayed using randomly visible segments can be easily imagined. For example, the biometric challenge of Figures 10, 10B can be performed using a camera of the user terminal or connected thereto. This challenge can be also combined with a facial recognition since lip-reading can be performed using video images of the face of the user. This challenge can be performed without emitting sounds.

Instead of capturing a requested part of the user face, the challenge of Figures 8A, 8B can request the user to make face movements a number of times, such as close one or two of his eyes, open his mouth, or smile.

Another example of biometric challenge can involve iris recognition using a camera of the terminal or connected thereto. This challenge can request the user to capture his left or right eye, or both of them according to a particular sequence, and/or request the user to close the captured eye a number of times.

In step S31 or S57, the server ASRV can further perform a biometric recognition algorithm (face, fingerprint, iris, voice, lips movements, etc.) corresponding to the biometric data requested to the user, to determine whether the biometric data entered by the user correspond to biometric data previously registered by the user with the server ASRV.

According to an embodiment, visible and invisible segments of each number ND to be displayed appear in the frames FRM with respective probabilities such that the displayed digits are intelligible for the human visual system, thanks to the persistence of the latter. For example, the generated software components GC are configured to display the invisible segments with a probability between 0 and 15%, and the visible segments with a probability between 50 and 100%. The visible segments forming one of the numbers ND can be displayed with respective probabilities comprised between 50 and 100%, and the invisible segments in a number ND can be displayed with probabilities comprised between 0 and 15%. The display probabilities of the segments SG forming the numbers ND to be displayed can be adjusted as a function of the frame display frequency, such that the numbers ND remain intelligible for the human visual system.

The validation key "V" may be not necessary, in particular when the circuits of the terminal UT can detect when the requested biometric challenge is entered by the user.

Figure 11 illustrates a functional architecture of the application APP, according to an embodiment. The application APP comprises a management module MGM, an initialization module INM, an authentication module AUTM, a link module LKM, a software component execution module GCM. The management module MGM controls the other modules INIM, RGM, LKM and GCM, and the communications between the application APP and the server ASRV through the communication circuits NIT. The initialization module INM performs step S10. The link module LKM performs steps S12 and S13. To this purpose, the link module LKM can be connected to an image sensor IMS of terminal UT to acquire an optical code corresponding to the link token LTK to be received by the terminal UT, and displayed by the terminal OT. The authentication module AUTM performs steps S26 to S30 to process the authentication request received in step S22, to trigger the execution of the software component GC, and to receive and transmit the biometric data BIOD entered by the user. The module AUTM is connected to the keypad or a touch-sensitive surface TSIN of the terminal UT and to circuits for acquiring the requested biometric data (camera, microphone, fingerprint sensor, iris sensor, heart rate monitor, glucose monitor, blood pressure sensor, ...). The module GCM performs the step S28 to generate and display the image frames FRM at a suitable refresh rate, the module GCM selecting at each frame, input values to be applied to the software component GC and executing the latter. The module GCM produces the image frames FRM which are displayed on the display screen DSP of the terminal UT.

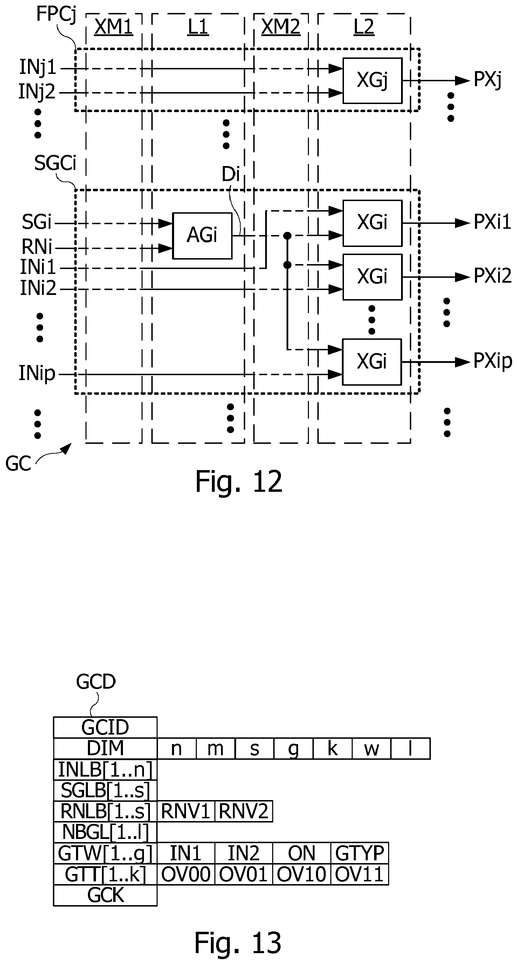

Figure 12 illustrates an example of a software component GC. According to an embodiment, the software component GC is a software-implemented Boolean circuit encrypted as a garbled circuit. The software component GC comprises two circuit layers L1, L2, and two interconnection matrices XM1, XM2. A first interconnection matrix XM1 receives input data INi, INj, SGi, RNi of the software component GC. The first layer L1 comprises logic gates AGi, each gate receiving two input values SGi, RNi from the matrix XM1 and providing one output value Di to the second interconnection matrix XM2. The second layer L2 comprises logic gates XGi, XGj, each gate receiving two input values from the matrix XM2, and providing one output value PXi, PXj representing a pixel value. Each of the logic gates AGi of the first layer L1 receives input values SGi, RNi of the software component GC, selected by the matrix XM1. Each of the logic gates XGi of the other layer L2 receives one input value INi of the software component and one output value provided by one logic gate AGi belonging to a previous layer (L1), these input values being selected by the matrix XM2. Each of the logic gates XGj of the layer L2 receives two input values INj1, INj2 of the software component, these input values being selected by the matrix XM1 and/or XM2. This structure of the software component enables parallel processing, since all logic gates in a same circuit layer L1, L2 can be processed at the same time.

According to an embodiment, to generate image frames FRM as shown in Figure 8A, 9A or 10A, the software component GC comprises one circuit SGCi for each of the segments SG that can be visible or invisible in the image frames FRM, and one circuit FPCj for each pixel PXj distinct from a segment pixel PXi, for example around the segments SG or in the banner frame BNF. Thus, in the example of figures 9A, 9B, the image frames FRM to be generated comprise 12 numbers ND as, formed of 84 segments, the software component GC comprises 84 circuits SGCi. Each of the circuits SGCi comprises one logic gate AGi in the circuit layer L1, and as much logic gates XGi in the circuit layer L2, as the number of pixels PXi1, PXi2, ... PXip forming the segment SG as displayed in the image frames FRM.

The gate AGi performs for example a logical operation such as AND, OR, NAND, NOR, to display each visible segment with a probability of 50% (1/2), and each invisible segment with a probability of 0% to be visible. Each of the gates XGi performs a logical XOR operation with an input INi of the software component. The gate AGi receives one segment input value SGi and a corresponding random input value RNi. The output Di of the gate AGi is connected to an input of all gates XGi of the circuit SGCi. Each gate XGi also receives one of the input values INi1-INip and provides one pixel value PXi1-PXip to the output of the circuit GC.

Each of the circuits FPCj comprises one logic gate XGj performing a logical XOR operation per pixel PXj controlled by the software component GC and distinct from a segment pixel in the image frames FRM. Each of the gates XGj receives two input values INj1, INj2 of the software component GC and provides one pixel value PXj. Each of the gates XGj can be located either in layer L1 or in layer L2. The number of input values INi, INj can be limited to a value around the square root of the number of pixels PXi, PXj controlled by the software component GC.

The circuits SGCi are configured to display the visible segments of the numbers ND with a probability of 50% and the invisible segments of these digits with a probability of 0%. The structure of the software component GC can be adapted to apply other display probabilities to the visible and invisible segments of the digits to be displayed. Of course, the digits can also be controlled and/or arranged (e.g. with more segments) to display other signs than numbers such as alphabetic characters or more generally symbols including ASCII characters.

In the example of the software component of Figure 12, one input INi or INj can be connected to several logic gates XGi, XGj, such that there are fewer inputs INi, INj than the number of logic gates XGi plus twice the number of logic gates XGj.

The interconnection matrix XM2 defines which pixel generated by the software component belongs to a segment SG. According to one embodiment, the position, orientation and shape of each segment SG are varied by one or several pixels, depending on the display resolution of the user terminal, from one software component to another. This provision makes it more difficult to perform a machine optical recognition of the displayed symbols.

It may be observed that the term "segment" as used herein designates a set of pixels that are controlled by a same one of the segment input values SGi. The set of pixels forming a segment is not necessarily formed of adjacent pixels, but can comprise groups of adjacent pixels as the segments forming one of the numbers ND. In addition, the pixels forming a segment are all visible or all invisible in one displayed image frame FRM.

Figure 13 illustrates the structure and content data GCD defining the software component (which is transmitted in step S25 or S53), when it is designed as a garbled circuit, according to an embodiment. The data GCD comprises:

a unique software component identifier GCID,
a number set DIM comprising a number n of input values INi, INj, a number of output values m, a number s of segment input values SGi or random input values RNi, a number g of gates AGi, XGi, XGj, a number k of gates AGi, a number w of wires in the circuit, and a number 1 of circuit layers L1, L2 in the circuit GC,
an input data table INLB comprising all values of the inputs INi, INj of the circuit GC, for example numbered from 1 to n, as specified for the execution of the software component,
a segment table SGLB comprising all values of the segment inputs SGi of the software component GC, numbered from 1 to s, as specified for the execution of the software component,
a random data table RNLB comprising the random values RNi, numbered from 1 to s,
a gate wire table GTW defining two input wires numbers IN1, IN2, an output wire number ON and a type identifier GTYP of each logic gate AG, XG of the software component GC, the gates of the circuit being numbered from 1 to g, and
a gate truth table comprising four values OV00, OV01, OV10, OV11 for each of the logic gates AG of the software component GC.

In the example of Figure 12, the type GTYP specifies that the corresponding logic gate performs either an XOR operation or another logical operation such as AND, OR, NOR, NAND.

According to an embodiment, the input values INi, SGi, RNi, INj and the output values Di, PXi, PXj of the logic gates AGi, XGi, XGj, each representing a binary logical state 0 or 1, are defined by numbers of several bits, for example 64 or 128 bits. In this way, each input and output within the garble circuit GC has only two valid values, and all the other possible values, when considering the size in bits of these values, are invalid. When the software component GC is generated, the two valid values of each input SGi, RNi, INi, INj of the software component are randomly chosen, provided that the least significant bit of the two valid values are different, these least significant bits being used, when computing the output value of one of the logic gates, to select one value in the truth table of the logic gate.

The truth table GTT[i] of each logic gate AGi, comprises four values OV00, OV01, OV10, OV11, each corresponding to a combination (0, 0), (0, 1), (1, 0), (1, 1) of binary input values corresponding to the input values of the logic gate. The topology of the software component may be defined in the table GTW, by numbering each wire of the software component, i.e. each input wire of the software component from 1 to (n+2s) and each output of the logic gates from (n+2s+1) to (n+2s+g), and by associating to each logic gate AGi, XGi, XGj one record of the table GTW comprising two wire numbers IN1, IN2 to the two inputs of the gate and one wire number ON to the output of the gate. The wire numbers of the outputs of the software component GC are numbered from (n+2s+g-m+1) to (n+2s+g).

According to an embodiment, the table RNLB contains both valid values RNV1, RNV2, corresponding respectively to the logical states 0 and 1, of each of the input random values RNi. Each value RNV1, RNV2 can be equal with a same probability to either one or the other of the two valid values of the random value RNi corresponding respectively to the states 0 and 1.

The XOR gates XGi, XGj can be executed either by using a truth table which is encoded in the table GTT or by applying XOR operations to each pairs of bits of same rank in the input values of the gate. In the latter case, the field GTYP of the table GTW defines whether the gate is a XOR gate or another gate, and the table GTT comprises one record for each gate AGi only.

According to an embodiment, each value in the tables INLB, SGLB, RNLB, GTT is encoded by a 128-bit word, and each record of the table GTW is encoded on a 64-bit word, the wire numbers IN1, IN2, ON being encoded on 21-bit words. The table GTW can be transmitted from the server ASRV to the terminal UT in a compressed form, for example using the gzip compression scheme.

According to an embodiment, the order of the logic gates in the gate tables GTW, and GTT can be defined randomly, provided that the table records GTW[i] and GTT[i] at the index i refer to the same gate.

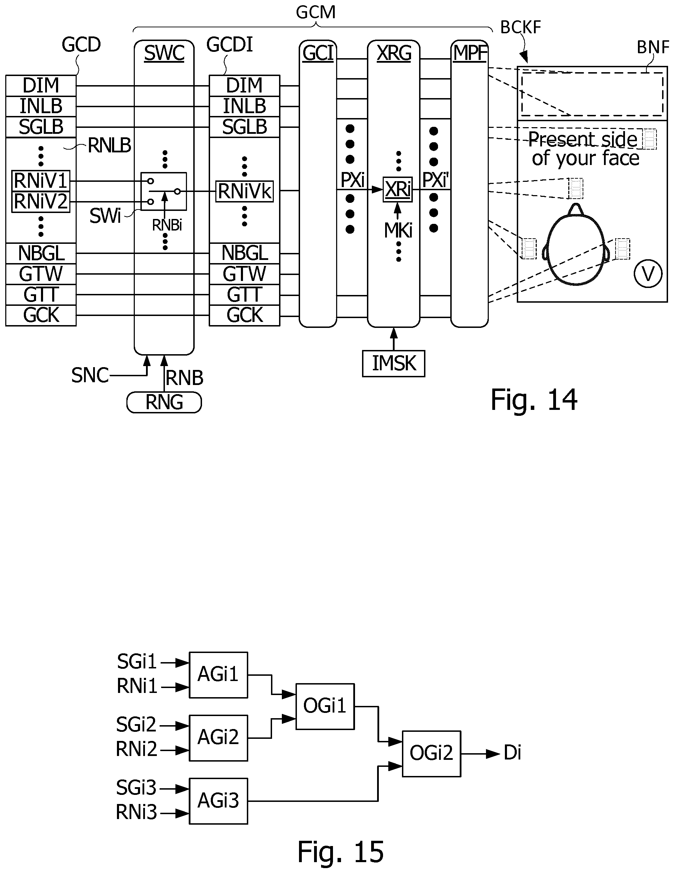

Figure 14 illustrates the module GCM, configured to execute a software component and to generate the image frames FRM, according to an embodiment. The module GCM executes the software component each time a new image frame is to be generated, i.e. at a frame refresh rate equal to or greater than 30 Hz. To this purpose the module GCM can be activated by a synchronization signal SNC having for example a rising edge each time a new image frame must be generated. The module GCM comprises a switching module SWC, a software component interpreter GCI, an XOR masking circuit XRG and a pixel mapping module MPF. The switching module SWC receives the synchronization signal SNC and the structure and content data GCD defining the software component GC to be executed, and loads the data to be processed by the next execution of the software component GC in an input data structure GCDI. Thus, the switching module SWC transmits the data DIM, INLB, SGLB, NBGL, GTW, GTT and GCK without modification to the structure GCDI.

According to an embodiment, the switching module SWC performs switching operations SWi to select one or the other of the two valid values RNiV1, RNiV2 of each input random value RNi. Each switching function SWi is controlled by a respective bit RNBi of a random number RNB having s bits, generated by a random number generation function RNG, s being the number of the random values RNi to be input to the software component GC or the total number of segments SGi of all the digits to be displayed. Each switching operation SWi provides for each of the random values RNi a randomly selected value RNiVk which is stored in the structure GCDI. As a result of the selection of one of the two valid values RNiV1, RNiV2 of the random values RNi (the visible segments SG to be displayed corresponding to an input data SGi set to the state one), the output of the corresponding AND gate AGi is set to state either 0 or 1, depending on the logical state of the selected random value RNiVk. As a consequence, the visible segments SGi appear in each frame FRM with a probability equal to the probability of the random input value RNi to be set to state 1. If the number RNB is a true random number, this probability is equal to 50%.

The module GCI is a dedicated interpreting module configured to successively execute each of the logic gates of the first circuit layer L1, as defined by the data in the input data structure GCDI, and then each of the logic gates of second circuit layer L2. To this purpose, the interpreting module GCI can use a wire table receiving the value of each wire of the software component GC, written in the table at an index corresponding to the wire number of the wire value. The wire table is first loaded with the input values INi, INj, SGi, RNiVk of the software component, written in the table at indexes (between 1 and n+2s) corresponding to wire numbers assigned to the input values. Then the computed output value of each executed logic gate is written in the wire table at an index corresponding to the wire number of the output value. At the end of the software component execution, the wire table comprises the values of the outputs of the software component at indexes from (n+2s+g-m+1) to (n+2s+g).

The output value of each logic gate can be computed by applying a non-reversible function applied to both input values of the gate and to one value selected in the truth table of the gate, as a function of the least significant bit of each of the two input values:

$$OV = PF1(IN1, IN2, G) \qquad (1)$$

where IN1 and IN2 represent the input values of the gate, $G = GTT[IN1\{0\} /\!/ IN2\{0\}]$, $IN1\{0\}$ and $IN2\{0\}$ represent the least significant bit of the input values IN1, IN2, "$/\!/$" represents the bit concatenation operator, GTT represents the four-element truth table of the gate, and PF1 represents the non-reversible function.

According to an embodiment, the function PF1 can use an encryption function such as AES (Advanced Encryption Standard) using an encryption key assigned to the software component. In this case, the encryption key GCK can be stored in the structure and content data GCD of the software component GC. For example, the output value OV of a logic gate can be computed as follows:

$$OV = AES(GCK, K) \oplus K \oplus G \qquad (2)$$

with $K = CF(IN1,IN2) \oplus T$, "$\oplus$" represents the Exclusive OR (XOR) operator, T represents a number assigned to logic gate, for example the number of the logic gate, and can also depend on the values of the inputs IN1, IN2, CF represents a combination function, and AES(GCK, K) represents an encrypted value of K by the AES encryption algorithm using the encryption key GCK. The combination function can be an XOR operation or an operation in the form:

$$CF(IN1,IN2) = SH(IN1,a) \oplus SH(IN2,b), \qquad (3)$$

SH(X,a) representing a left shift operation of X by a number "a" of bits.

The least significant bit of each output data of the software component GC provided by the module GCI is considered as a pixel value PXi, PXj. The module XRG combines each pixel value PXi (least significant bit of each output value provided by the software component) with a respective mask bit value MKi belonging to an image mask IMSK provided in the structure and content data GCD. The combination operation used can be an XOR operation XRi. The respective least significant bits of the output values PXi, PXj of the software component represents white noise since the output values of the software component including the least significant bit thereof are randomly chosen. Thus the image parts generated by the software component are in an encrypted form, and are decrypted using the image mask IMSK.

The image mask IMSK comprises the message MSG, such that when combined with the pixels PXj provided by the software component GC, the message MSG becomes intelligible. The image mask IMSK can also be configured to make visible the pixels PXi of a digit segment SG corresponding to a segment input value SGi fixed to the binary state 0 (segment configured to be invisible). In this way, the segment is always visible (with a probability of 100%) in the generated image frames FRM. Another way to configure a segment always visible or invisible is to attribute a same value to the two random values RNiV1, RNiV2 corresponding to the related segment input value SGi in the transmitted structure and content data GCD.

According to one embodiment, the final mask IMSK is transmitted to the terminal UT in step S25, S25' or S53 using another communication channel, for higher security.

The interconnection matrices XM1, XM2 define where the pixels PXj corresponding to the input values INj and the pixels PXi corresponding to the segment input values SGi are displayed in the image frames FRM. The input values INi, INj define in relation with the image mask IMSK if the corresponding pixel PXi, PXj in output of the software component GC is visible or invisible, the visibility of the pixels PXi depending also on the corresponding value of the random input RNi. The respective binary states of the input values INi, INj can be randomly selected at the time the software component is generated, the image mask IMSK being then generated as a function of the selected binary states of the input values INi, INj, the interconnection matrices XM1, XM2 and the image frame FRM to be displayed which defines the visible and invisible pixels in the image frame.

The mapping module MPF inserts groups of pixels values PXi' provided by the module XRG, at suitable positions into a background image frame BCKF to generate one of the image frames FRM to be displayed. In particular, the module XRG provides a group of pixels PXi' which forms the banner frame BNF as shown in Figures 8A, 9A, 10A, and groups of pixels PXi' which form each of the random numbers ND to be displayed in a frame FRM. The mapping module MPF inserts these groups of pixels in respective predefined locations in the background image frame BCKF to generate one of the image frames FRM as shown in Figures 8A, 9A, 10A. In one embodiment, the module XRG outputs a directly displayable image frame. In this case, the mapping module is not mandatory.

According to another embodiment, the unmasking operation performed by the module XRG could be combined with the generated image frames FRM, i.e. after the image mapping operation performed by the mapping module MPF. Therefore the mask IMSK may have the size of the background image frame BCKF or the image frames FRM.

The transmission of the two valid values of the random inputs RNi in the structure and content data GCD of the software component, enables introduction of randomness in the execution and output data of the software component at a very low cost. In contrast, a software component producing random output data would require to introduce a random generator in the software component, which cannot be obviously realized without adding complexity to the garbled circuit, and thus without increasing the size of the structure and content data GCD defining the software component. In addition, the transmission of the two valid values RNiV1, RNiV2 of the random inputs RNi does not reduce the security related to a confidentiality of the displayed numbers ND, since the correspondence between each random input value RNiV1, RNiV2 and a binary value 0 or 1 thereof cannot be established easily.

According to one embodiment, each time the terminal UT has to perform a new authentication, a new software component GC displaying a new biometric challenge is executed in step S28.

According to an embodiment, in order to avoid the transmission of one software component GC (in step S25, S25' or S53), each time the user terminal is required to perform a new authentication, several alternative software components (defined by the structure and content data GCD) can be downloaded in the terminal UT in one time, and the terminal UT selects a non-already executed software component each time it has to perform a new authentication. As an example, several software components are downloaded with the application APP when the latter is downloaded and installed in a user terminal UT. Then, when one or several software components are used, a new set of software components can be downloaded from the server ASRV to the terminal UT, for example when the terminal has an efficient network connection.

According to an embodiment, several alternative software components are stored in the terminal UT in an encrypted form, and each time the terminal UT must execute a new software component, the server ASRV sends a corresponding decryption key to the user terminal.

According to an embodiment, only a part of each of the software components is downloaded into the terminal UT. The downloaded part of each software component can include the data GCID, DIM, NBGL, GTW with or without the table RNLB. Each time the terminal UT has to perform a new authentication, the server ASRV only transmits to the terminal the data INLB, SGLB, GCK and IMSK, in step S25, S25' or S53. Then, the terminal UT transmits the identifier GCID of the software component used for authentication to the server ASRV, for example in step S28 or S30, or S54 or S56. When the server ASRV receives a software component identifier GCID from a user terminal UT, it checks in the database UDB that the received identifier corresponds with a next unexecuted or valid software component previously transmitted to the terminal UT. If the received identifier does not correspond with a next unexecuted or valid software component previously transmitted to the terminal UT, the server ASRV invalidates the user authentication and the corresponding transaction. The server ASRV may also invalidate a previous transaction performed with the same software component (corresponding to the same identifier GCID).

According to an embodiment, the server ASRV can assign a validity indicator (for example in the table GCP of Figure 5) to each software component it generates for a user terminal. The server ARSV sets the validity indicator to valid when it transmits the corresponding software component to a user terminal in step S25, S25' or S53, and to invalid when it receives the corresponding message GCR in step S30, S56. In addition, the server ARSV can assign a validity period to each generated software component, a software component being set to invalid when its validity period has elapsed. The server ASRV may be configured to rejects a message GCR transmitted in step S30, S56 when it corresponds to a software component set to invalid.

Figure 15 illustrates a part of the software component GC according to another embodiment. The circuit part disclosed in Figure 15 is intended to replace one logic gate AGi in the circuit of Figure 12. In the example of Figure 15, the circuit part comprises three AND gates AGi1, AGi2 and AGi3 and two OR gates OGi1, OGi2. Instead of having one segment input SGi and one random input RNi for each segment of the image frame FRM to be displayed with a probability lower than 100%, this circuit part comprises for one segment, three segment inputs SGi1, SGi2, SGi3 and three corresponding random inputs RNi1, RNi2, RNi3. Each of the gates AGi1, AGi2, AGi3 combines one respective segment input SGi1, SGi2, SGi3 with one respective random input RNi1, RNi2, RNi3. The outputs of the gates AGi1 and AGi2 are connected to the inputs of the gate OGi1, and the outputs of the gates AGi3 and OGi1 are connected to the inputs of the gate OGi2. The output Di of the gate OGi2 is connected to as much gates XGi as the number of pixels forming the segment controlled by the inputs SGi1, SGi2, SGi3. In this way, when all the segment inputs SGi1, SGi2, SGi3 are set to the binary state 0, the output Di of the gate OGi2 is set to the binary state 1 with a probability of 0%. When only one of the segment inputs SGi1, SGi2, SGi3 is set to the binary state 1, the output Di of the gate OGi2 is set to the binary state 1 with a probability of 50% (1/2). When only two of the segment inputs SGi1, SGi2, SGi3 are set to the binary state 1, the output Di of the gate OGi2 is set to the binary state 1 with a probability of 75% (3/4), and when all the three segment inputs SGi1, SGi2, SGi3 are set to the binary state 1, the output Di of the gate OGi2 is set to the binary state 1 with a probability of 87.5% (7/8). Depending on the corresponding input values INi1-INip and corresponding mask bit values MKi1-MKip of the mask IMSK, and the segment input values SGi1, SGi2, SGi3, it is possible to display a segment SGi with a probability fixed either to 0%, 12.5% (1/8), 25% (1/4), 50% (1/2), 75% (3/4), 82.5% (7/8) or 100% (1). According to an embodiment, the visible segments SG are displayed in the image frames FRM with a probability selected in a set of visible probability values comprising at least 12.5%, 25%, 50%, 75%, 82.5% or 100%.

These probabilities or others can be obtained using other combinations of logic gates combining the three segment input values SGi1, SGi2, SGi3 and the three random input values RNi1, RNi2, RNi3.

Obviously, other probability values can be reached by the software component, by increasing the number of inputs for one segment, and thus by increasing the number of AND gates in the first circuit layer L1 and the number of combining OR gates in following circuit layers.

According to one embodiment, the visible segments are displayed with a probability decreasing as a function of the experience level of the user. At first authentications, performed from a first installation of the application APP, the visible segments SG can be displayed in the image frames FRM with high probabilities, e.g. between 75% and 100%. As the experience level of the user grows, these probabilities can be progressively reduced and finally set to randomly-selected values for example between 12.5% and 50%.

In the embodiment using garbled circuits, the generation of a software component, performed by the server ASRV in step S24 or S52, comprises generating random values representing the binary states 0 and 1 of the input bits and of the output bits of the logic gates of the software component, some of the logic gate outputs corresponding to outputs of the garbled circuit. The generation of a software component further comprises randomly selecting the interconnection matrices XM1, XM2, i.e. randomly selecting the links between the inputs of the software component and the inputs of the logic gates of the software component, and between the outputs of some logic gates and the inputs of other logic gates (definition of the table GTW). The generation of a software component further comprises defining the truth tables GTT of the logic gates of the software component, and encrypting each value of these truth tables using an encryption key. According to an example, each four values G (=GTT[IN1{0} // IN2{0}]) of the truth table of a logic gate of the software component GC can be computed as follows:

$$G = PF2(IN1, IN2, OV) \qquad (4)$$

for each possible combination of the valid values of the inputs IN1, IN2 and the output OV, when considering the binary states corresponding to the valid values of IN1, IN2 and OV, and the logic operation performed by the logic gate, PF2 representing a non-reversible function. According to the example defined by equation (2), each four values G of the truth table of a logic gate can be computed as follows:

$$G = AES(GCK, K) \oplus K \oplus OV \qquad (5)$$

with $K = CF(IN1, IN2) \oplus T$.

As a consequence, it is very difficult to determine the binary states of the input and output values and the function of the logic gates of the software component. Therefore, the functioning of the software component GC cannot be easily determined. In addition, the software component can process only the two valid values of each input of the circuit, among a huge number of invalid values. Therefore, it is not possible to apply any values to the inputs of the software component. For more details on garbled circuits, reference may be made to the document "Foundations of Garbled Circuits", Mihir Bellare, Viet Tung Hoang, Phillip Rogaway, dated October 1, 2012.

A hacker or a malware program executed by the terminal UT has a very short time to get the displayed biometric challenge BIOC to be entered, by analyzing the displayed image frames FRM or by executing or analyzing the software component GC, and must have the corresponding user biometric data BIOD. Therefore it appears to be very difficult for a hacker to be authenticated in steps S21 to S32 or S48 to S60 (instead of the user), since even if he has biometric data from the user, he must know which biometric challenge is displayed by the execution of the software component GC transmitted to the terminal UT in step S25, S25', S53, to provide the biometric data corresponding to the one requested in the displayed biometric challenge.

When the server ASRV generates the software component GC, it can be decided to use another bit rank in the values of the wires of the software component for defining the corresponding binary state of these values. The bits at the selected bit rank in the input values a logic gate AGi are used to select a data in the truth table GTT of the logic gate, and the bits at the selected bit rank in the output values PXi of the software component GC are extracted and applied to the module XRG.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

The methods disclosed herein may be totally or partially implemented by software programs executable by the processors of the user terminal UT, such as the main processor HP (CPU) and/or at least partially by the graphic processor GP.

Further, the methods disclosed herein are not limited to displaying sensitive information such as the numbers ND. Indeed, the object of such a display is to check that the user knows a secret data shared with the server ASRV and perceives information presented by the terminal in a way perceptible only by a human. Alternative challenge-response schemes can be implemented in other embodiments. In addition to this or in another embodiment, the generated frames may be formed with differences with a previously generated frame.

According to another embodiment, the flickering or blinking of segments may be controlled directly in/by the graphic processor, by setting pixel intensity, additive or subtractive pixel color, pixel refresh rate, or pixel flickering parameters of the graphic processor.

According to embodiments, the display DSP may be separated from the user terminal UT. For example, the display screen may be the one of a smartwatch, a smart glass or a virtual reality or an augmented reality headset, and the user terminal may be a smartphone, a tablet or a laptop/desktop computer. In some embodiments, the communication link between the display and the user terminal may be wireless. For example, the communication link may be a one or a combination of Bluetooth, Wi-Fi, or any other radio frequency or wireless communication technology.

According to some embodiments, the biometric sensor is separated from (e.g. not part of) the user terminal UT. In addition, the biometric data BIOD may be acquired using various sensors used separately or in combination. In the example of a heart-rate monitor, a smartwatch may provide the biometric sensor and the display to be used to display the biometric challenge. In another embodiment, a glucose monitor wore separately may be used. Also, in other embodiments, a heart-rate monitor may be combined with a thermal imaging camera. In some embodiments, the communication link between the biometric sensor(s) and the user terminal may be wireless. In some embodiments, some if not all communication links may use secure protocols.

The challenge can be transmitted to the user using other means than by displaying it on a display screen. For instance, the challenge can be transmitted to the user by audio means using an audio cryptographic algorithm such as described in "Simple Audio Cryptography", by Yusuf Adriansyah, dated April 29, 2010. According to this algorithm, an original audio sequence is decomposed into a number of source audio sequences of the same length as the original audio sequence, in a way such that the original audio sequence can be reconstructed only by simultaneously playing all the source audio sequences generated by the decomposition, and such that it is very difficult to reconstruct the original audio sequence if any one of the source audio sequence is missing. Provision may be made to play two source audio sequences simultaneously, one via the terminal UT and the other via other means such as a portable device having a memory storing a source audio sequence and a headphone playing the stored source audio sequence without a microphone of the terminal hearing it. If the user hears an intelligible audio message by playing the two source audio sequences simultaneously, it means that the source audio sequence played by the portable device complements the source audio sequence.

Further, the methods disclosed herein are not limited to authenticating a user in view of validating a transaction. The methods disclosed herein may be applied to securely transmit sensible or secret information to or from a user, or more generally to securely perform a sensitive operation in a non-secure environment.

Further, the methods disclosed herein are not limited to a method comprising displaying image frames and introduction of biometric data using a single user terminal. The methods disclosed herein may be applied to securely authenticate a user on another connected device, the frame images being displayed on the user terminal or on a remote display such as a smartwatch, virtual reality or augmented reality glasses or lenses, or projected on a surface or in the form of a 3D image, or any IoT (Internet of Things) device having a display function or the like. Similarly, the biometric data may be input in another device connected to the user terminal. Therefore, the words "user terminal" may designate a single device or a set of devices including a terminal without a display, an IoT device, a smart home terminal, and any input terminal that allows the user to capture biometric data.

In other embodiments, the display may be any display including for example an ATM, a vending machine, a TV, a public display, a projected display, a virtual display a 3D display or a hologram. In other embodiments, the terminal may be any input equipment including for example a touch screen, a game accessory, a gesture acquisition system, a voice or sound command system.

In other embodiments, the image frames FRM are generated without applying the mask IMSK, and are displayed separately from the mask IMSK, using two display devices, one of the two display devices being transparent, such as a display device in the form of eye lenses, the displayed images becoming intelligible to the user when they are superimposed with the displayed mask IMSK, the displayed white pixels of the mask being transparent and the displayed black pixels of the mask being opaque.

Further, the methods disclosed herein, introducing randomization in the execution of the software component protected against tampering and reverse-engineering, are not limited to generate blinking pixel in an image or an image frame. More generally, these methods can be used in any application in which a random state is required in a sensitive software function, protected against reverse-engineering and tampering, the software function receiving input data and providing output data. For example, these methods can be applied to protection of data without using encryption or decryption keys which are exposed to key theft. In this example, the software component is configured to provide a part of the protected data as a function of a set of random input data, each random input data having two possible values. Each combination of the random input values applied to the software component is used to compute a respective part of the protected data. The number of combinations of the random input values defines the number of data parts that can be computed by executing the software component. As an example, the data to be protected can be images, and the data parts of such images can be pixel values of an image or color component values of the image pixels, the execution of the software component providing a pixel value or a part thereof and a position of the pixel in the image (see "Secure Image Datasets in Cloud Computing", X. Arogya Presskila, P .Sobana Sumi, in International Journal of Advanced Research in Computer Science and Software Engineering, Vol. 4, Issue 3, March 2014). The parts of the data to be protected that are each computed by one execution of the software component applied to one combination of the input values can be as small as desired. For instance, the software component can be configured to provide by one execution a point of a Gaussian curve or a value that is used to compute a histogram, the data part value corresponding to the highest value computed by the software component or to the value having the highest occurrence number in the histogram. Only a part of the protected data can be made accessible when only a part of the two alternative values of the input data of the software component is provided, only one value being provided for the other input data of the software component.

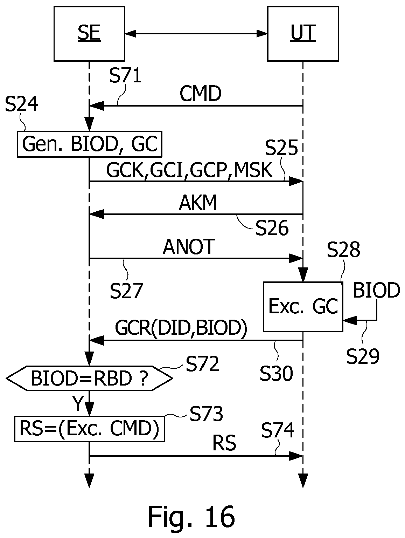

Further, the methods disclosed herein are not limited to an implementation involving an authentication server. Other implementations can involve a secure element within the user terminal, such as the secure processor SE shown in Figure 2, or a secure domain within a processor of the terminal. In the methods disclosed herein, all operations performed by the server ASRV can be performed by such a secure element. Figure 16 illustrates authentication steps S71 to S74 performed by the user terminal UT and a secure element SE linked to the main processor HP of the terminal UT, and enabling the secure element to authenticate the user. In step S71, the terminal UT transmits a command CMD to the secure element SE, this command requiring an authentication of the user before being executed by the secure element. Then the terminal UT performs steps S26 and S28 to S30, as previously disclosed. The secure element SE performs steps S24, S25 and S27, in place of the server ASRV. Then the secure element SE performs steps S72 to S74. In step S72, the secure element SE compares the biometric data BIOD input by the user to corresponding requested biometric data RBD selected among biometric data securely stored by secure element SE. If the biometric data BIOD entered by the user match the requested biometric data RBD stored by the secure element SE, the latter performs step S73 in which it executes the command CMD requested in step S71. In step S74, the secure element SE transmits an execution report RS of the command CMD. In this way, the secure element SE executes the command CMD only if and when the user of the terminal UT authorizes it.

According to an embodiment, the secure element SE in Figure 16 can be implemented by or can be part of an external terminal connected to the user terminal UT by means of a communication link such as NFC (Near Field Communication) or Bluetooth™, or the like. The external terminal can be a point-of-sale terminal.

Further, the methods disclosed herein are not limited to garbled circuits comprising gates having only two inputs and one output as presented above for clarity of explanations only. Other types of gates with three or more inputs and one or more outputs or receiving data having more than two valid states may be implemented using truth tables having more than four lines. Therefore, the randomness obtained by transmitting and selecting one of the possible values RNiV1 and RNiV2 of the input RNi, may also be obtained by transmitting and randomly selecting one value among three or more valid values of an input of the garbled circuit.

Further, the methods disclosed herein are not limited to an implementation of the software component by a garbled circuit. Other implementations of the software component such as including obfuscated programs can be used to hide parts of the program loaded in the main processor of the terminal UT, and/or to prevent sensitive parts of the program from being unveiled or modified by unauthorized persons. Methods of obfuscating programs are disclosed for example in the documents "Obfuscating Circuits via Composite-Order Graded Encoding" Benny Applebaumy, Zvika Brakerskiz, IACR-TCC 12/01/2015, and "How to Obfuscate Programs Directly", Joe Zimmerman, IACR, 30/09/2014.

More generally, the conception of a garbled circuit can be performed by translating a program written in language such as C or C++ into a circuit design language such as VHDL or Verilog to obtain a logic or Boolean circuit comprising logic gates.

Further, the methods disclosed herein are not limited to the use of a software component protected against tampering and reverse-engineering, such as generated using obfuscation and/or garbled circuit methods. As an example of such an application, the methods disclosed herein may be used to perform operations that do not require high security level, such as data privacy protection, video games (e.g. management of available virtual lives) or medical eye testing.

Further, the methods disclosed herein are not limited to an implementation involving a mask such the image mask IMSK to decrypt output values of the software component. Other implementations can generate and execute a software component directly outputting the pixels values to be displayed. In addition, the message MSG can be directly provided in the output pixel values. In addition, the mask IMSK can be transmitted separately from the software component or the structure and content data thereof, e.g. via different transmission means, optionally after the execution of the software component, totally or in several parts.

The term pixel, as used herein for a standard display screen, may be understood as coordinates, either 2D coordinates for a 2D display or 3D coordinates for a 3D or stereo display or for a projected display or the like.

Further, the disclosure and the illustrations are to be considered as illustrative rather than restrictive, and the appended claims are intended to cover all such modifications, enhancements and other embodiments, or combinations thereof, which fall within the true spirit and scope of the description. Therefore, the scope of the following claims is to be determined by the broadest permissible interpretation of the claims and their equivalents, and shall not be restricted or limited by the foregoing description.

**Claims**

1. A method for authenticating a user, the method comprising:

   receiving from a secure processor (ASRV, SE), a software component (GC) configured to generate an image frame comprising random pixels (PXi) having a probability lower than 100% to be visible in the image frame;
   executing the software component a plurality of times to generate a plurality of image frames;
   displaying the plurality of image frames at a frame display rate, the image frames including information (ND) which is machine unintelligible as being formed of the random pixels, the frame display rate being such that the information becomes intelligible to the user, the information specifying a biometric challenge to enter by the user;
   acquiring biometric data (BIOD) from the user; and
   transmitting the biometric data to the secure processor,

2. The method of claim 1, wherein the user being authenticated when the biometric data correspond both to the information and to stored biometric data from the user.

3. The method of claim 1 or 2, wherein the software component (GC) is configured to generate a plurality of frame image parts (ND) each comprising the random pixels (PXi), the method further comprising inserting each generated image frame part into an image frame background (BCKF) to generate the plurality of image frames (FRM).

4. The method of claim 1 to 3, wherein the software component (GC) is configured to generate encrypted frame image parts comprising the random pixels (PXi), the method further comprising:

   decrypting, by the user terminal, each generated encrypted image frame part, by applying to each pixel of the encrypted image frame part an XOR operation with a corresponding pixel of a decrypting mask (IMSK), each decrypted image frame part being inserted into an image frame background (BCKF) to generate one of the plurality of image frames (FRM), the decrypting mask (IMSK) being configured to produce a message (MSG) in the displayed image frames (FRM).

5. The method of one of claims 1 to 4, wherein the machine unintelligible information (ND) in the displayed image frames comprises segments (SG) arranged to form symbols, or numeric or alphanumeric characters, at least a part of the segments being formed with the random pixels (PXi).

6. The method of claim 5, wherein the segments are arranged to form symbols (ND) defining the biometric data to be entered by the user for being authenticated, the response from the user depending on the symbols.

7. The method of claim 6, wherein the information comprises symbols (ND) respectively associated with biometric challenges, one of the symbols being duplicated to specify one of the biometric challenges to enter by the user, the biometric challenges requested to the user comprising at least one of the following:

   parts and/or movements of the face of the user, using a biometric sensor to capture images of the face or eyes of the user,

fingerprints of the user hand fingers, using a biometric sensor to capture fingerprints of the user,

a sound, a letter or a word to be pronounced by the user, using a biometric sensor to capture voice or images of lip movements of the user,

eyes and/or eyes closure movements, using a biometric sensor to capture images of eyes or iris of the user.

8.  The method of one of claims 1 to 7, wherein the software component (GC) is configured to set a probability of the random pixels (PXi) to be visible in the displayed image frames (FRM), the probability being selected in a set of visible probability values.

9.  The method of one of claims 1 to 8, wherein the software component (GC) is configured to provide the random pixels (PXi) with a probability set to a value equal to 50% or comprised between 12.5% and 87.5%, to be visible in the displayed image frames (FRM).

10. The method of one of claims 1 to 9, wherein the software component is encoded as a garbled circuit (GC) comprising circuit inputs (SGi, RNi, INi, INj), circuit outputs (PXi, PXj), logic gates (AGi, XGi, XGj) and wires, each logic gate having two inputs and one output, each wire having a first end connected to one of the circuit inputs or to one of the logic gate outputs and a second end connected to one of the logic gate inputs or to one of the circuit outputs, the garbled circuit being generated by randomly generating a valid data representing each binary state of each of the wires, and by computing for one logic gate of the garbled circuit, truth table values as a function of each valid data of each input of the logic gate, each valid data of the output of the logic gate and a logic operation performed by the logic gate.

11. The method of claim 10, wherein the software component (GC) comprises a pixel set generation circuit (SGCi) for a set (SG) of random pixels (PXi1-PXip) to generate, each generation circuit comprising a first logic gate (AGi) and a set of second logic gates (XGi), the first logic gate combining a first input data (SGi) to a randomly selected second input data (RNi), and providing an output data (Di) to a first input of each of the second logic gates, a second input of each of the second logic gates receiving a third input data (INi), each of the outputs of the second logic gates providing a pixel value of the set of random pixels.

12. A terminal configured to:

receive from a secure processor (ASRV, SE) a software component (GC) configured to generate an image frame comprising random pixels having a probability lower than 100% to be visible in the image frame;

execute the software component a plurality of times to generate a plurality of image frames;

display the plurality of image frames at a frame display rate, the image frames including information (ND) which is machine unintelligible as being formed of the random pixels, the frame display rate being such that the information becomes intelligible to a user, the information specifying a biometric challenge to enter by the user;

acquire a biometric data (BIOD) from a user of the terminal; and

transmit the biometric data to the secure processor (ASRV, SE).

13. The terminal of claim 12, configured to perform the method of one of claims 2 to 11.

14. The terminal of claim 12 or 13, wherein the secure processor is a secure element (SE) associated with the terminal and connected to a main processor (HP) of the terminal, or belongs to a remote server (ASRV) linked to the terminal through a data transmission network (NT).

15. A secure element processor configured to execute the operations performed by a secure processor in the method of one of claims 1 to 11, wherein the secure element (SE) is connected to a main processor (HP) of a terminal (UT).

16. A server configured to execute the operations performed by a secure processor in the method of one of claims 1 to 11, wherein the server (ASRV) is linked to the terminal (UT) through a data transmission network (NT).

17. A computer program product loadable into a computer memory and comprising code portions which, when carried out by a computer, configure the computer to carry out the method of one of claims 1 to 11.

Fig. 1

Fig. 2

Fig. 3

Fig. 4

Fig. 5

Fig. 6

Fig. 7

Fig. 8A

Fig. 8B

Fig. 9A

Fig. 9B

Fig. 10A

Fig. 10B

Fig. 11

FPCj

| XM1 | L1 | XM2 | L2 |

INj1

INj2

SGCi

Di

SGi

RNi

INi1

INi2

AGi

INip

XGj → PXj

XGi → PXi1

XGi → PXi2

XGi → PXip

GC

Fig. 12

GCD

| GCID | | | | | | | |
|---|---|---|---|---|---|---|---|
| DIM | n | m | s | g | k | w | l |
| INLB[1..n] | | | | | | | |
| SGLB[1..s] | | | | | | | |
| RNLB[1..s] | RNV1 | RNV2 | | | | | |
| NBGL[1..l] | | | | | | | |
| GTW[1..g] | IN1 | IN2 | ON | GTYP | | | |
| GTT[1..k] | OV00 | OV01 | OV10 | OV11 | | | |
| GCK | | | | | | | |

Fig. 13

Fig. 14

Fig. 15

Fig. 16

Europäisches
Patentamt

European
Patent Office

Office européen
des brevets

# EUROPEAN SEARCH REPORT

Application Number

EP 17 19 5479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>Y | US 2016/085974 A1 (LELEU JEAN-LUC [FR])<br>24 March 2016 (2016-03-24)<br>* paragraphs [0059], [0060], [0068];<br>claim 1; figure 5 * | 1,2,8,9,<br>11-17<br>3-7,10 | INV.<br>G09C5/00<br>G06F21/36<br>H04L9/32 |
| Y | US 9 483 653 B2 (DAI ZOVI DINO [US])<br>1 November 2016 (2016-11-01)<br>* abstract *<br>* column 7, lines 7-32; figure 2B * | 3 | |
| Y | KIMMO JÄRVINEN ET AL: "Garbled Circuits<br>for Leakage-Resilience: Hardware<br>Implementation and Evaluation of One-Time<br>Programs",<br>INTERNATIONAL ASSOCIATION FOR CRYPTOLOGIC<br>RESEARCH,,<br>vol. 20100617:125539,<br>17 June 2010 (2010-06-17), pages 1-17,<br>XP061004126,<br>[retrieved on 2010-06-17]<br>* pages 4-5; figure 1 *<br>* page 8, paragraph 2; figure 2 * | 4,10 | |
| Y | WO 2010/148448 A1 (ASIA CAPITAL SERVICES<br>LTD [GB]; WALKER MATTHEW [SG])<br>29 December 2010 (2010-12-29)<br>* figures 4,6-8 * | 5,6 | TECHNICAL FIELDS<br>SEARCHED (IPC)<br><br>G09C<br>G06F<br>H04L |
| Y | US 9 485 237 B1 (JOHANSSON JESPER MIKAEL<br>[US] ET AL) 1 November 2016 (2016-11-01)<br>* column 7, lines 1-29 *<br>* column 12, lines 20-34; figure 2B * | 7 | |

The present search report has been drawn up for all claims

| Place of search | Date of completion of the search | Examiner |
|---|---|---|
| Munich | 26 March 2018 | Horbach, Christian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 19 5479

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2018

| Patent document cited in search report | | Publication date | Patent family member(s) | | Publication date |
|---|---|---|---|---|---|
| US 2016085974 | A1 | 24-03-2016 | EP | 2673732 A1 | 18-12-2013 |
| | | | EP | 3264305 A1 | 03-01-2018 |
| | | | FR | 2971599 A1 | 17-08-2012 |
| | | | US | 2014040633 A1 | 06-02-2014 |
| | | | US | 2016085974 A1 | 24-03-2016 |
| | | | US | 2017372083 A1 | 28-12-2017 |
| | | | WO | 2012107698 A1 | 16-08-2012 |
| US 9483653 | B2 | 01-11-2016 | US | 2016125193 A1 | 05-05-2016 |
| | | | US | 2016371498 A1 | 22-12-2016 |
| WO 2010148448 | A1 | 29-12-2010 | CN | 102714592 A | 03-10-2012 |
| | | | US | 2012162231 A1 | 28-06-2012 |
| | | | WO | 2010148448 A1 | 29-12-2010 |
| US 9485237 | B1 | 01-11-2016 | US | 9485237 B1 | 01-11-2016 |
| | | | US | 2017048230 A1 | 16-02-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012107698 A

**Non-patent literature cited in the description**

- **MIHIR BELLARE ; VIET TUNG HOANG ; PHILLIP ROGAWAY.** *Foundations of Garbled Circuits,* 01 October 2012
- **YUSUF ADRIANSYAH.** *Simple Audio Cryptography,* 29 April 2010
- **X. AROGYA PRESSKILA ; P .SOBANA SUMI.** Secure Image Datasets in Cloud Computing. *International Journal of Advanced Research in Computer Science and Software Engineering,* March 2014, vol. 4 (3
- **BENNY APPLEBAUMY ; ZVIKA BRAKERSKIZ.** Obfuscating Circuits via Composite-Order Graded Encoding. IACR-TCC, 12 January 2015
- **JOE ZIMMERMAN.** How to Obfuscate Programs Directly. IACR, 30 September 2014